Europäisches Patentamt

**European Patent Office**

**Office européen des brevets**

(19)

(11) Publication number: **0 044 098**
**B1**

(12) **EUROPEAN PATENT SPECIFICATION**

(45) Date of publication of patent specification: **13.06.84**

(51) Int. Cl.³: **H 04 L 1/24**

(21) Application number: **81200678.1**

(22) Date of filing: **16.06.81**

(54) System for testing a modem.

(30) Priority: **14.07.80 NL 8004044**

(43) Date of publication of application:
**20.01.82 Bulletin 82/3**

(45) Publication of the grant of the patent:
**13.06.84 Bulletin 84/24**

(84) Designated Contracting States:
**BE CH DE FR GB LI SE**

(56) References cited:
**EP - B - 0 008 608**
**GB - A - 1 376 129**
**US - A - 3 204 189**
**US - A - 3 735 271**

(73) Proprietor: **Staat der Nederlanden (Staatsbedrijf der Posterijen, Telegrafie en Telefonie)**
**P.O. Box 430**
**NL-2260 AK Leidschendam (NL)**

(72) Inventor: **Nuhoff, Peerke Jan**
**22 Zeewinde**
**NL-2403 GG Alphen aan den Rijn (NL)**

Courier Press, Leamington Spa, England.

## Description

The invention relates to a system for the remote testing of a modem of a subscriber's station for a speed of transmission which is different from the speed of reception. The system comprises a central station with a data tester, wherein a test signal is converted into a pseudo-random series signal, which is transmitted with a higher bit speed via a telephone line to a higher baud part of said modem of the subscriber's station, from which modem an output signal is converted by a converter into a signal with a lower bit speed, which signal can be transmitted via a lower baud part of the modem to the central station.

A system of this kind is described in EP—A—0008608. According to this EP—A a sample is taken from the output signal of a 1200-baud part of the modem of the subscriber's station with a sampling frequency of 75 samples per s. Each sample will be made longer up to the next sample, so a signal of 75 bits/s will be obtained, which signal can be returned to the central station via a 75-baud part of the modem of the subscriber's station.

An improvement of the system according to EP—A—0008608 is described in EP—A—0021544 (priority date: June 28, 1979; publication date: January 7, 1981), according to which improvement all the bits of the higher bit speed signal will be considered and therefore the observation time can be considerably shorter. The converted signal with the lower bit speed at the subscriber's station will be suited to be transmitted via the transmission channel of the modem and via the subscriber's line to the part for the lower speed of the modem at the central station. From there the signal is transmitted to the data tester, which detects and records errors in the test signal. If no special measures are taken, however, the errors in the part for the higher speed of the modem to be tested will not be detected. These errors have to be detected at the subscriber's station and have then to be "translated" into such errors in the signal with a lower speed that they can be detected at the central station. For this purpose a pulse lengthener extending the "high speed" pulses occurring in the "0" state of the signal after the speed converter, is made use of in the known technique. A drawback of this solution is that errors will not be detected, when the signal is in the "1" state, in consequence of which the observation time needed for determining a certain bit error ratio will be twice as long as in the case when all the errors are detected.

The object of the invention is to improve the known system in such a way that errors will also be detected when the signal is in the "1" state, which implies that the observation time will be halved.

In the system according to the invention the subscriber's station comprises an error detector between the speed converter and the transmission channel of the modem to be tested, which error detector comprises logic circuits, controlled by delayed clock pulses derived from a test signal, of which logic circuits a first circuit is or remains conductive owing to a leading edge of the test signal, a second circuit is or remains conductive owing to a trailing edge of the test signal, a third circuit serves for resetting the first circuit and a fourth circuit serves for resetting the second circuit, a fifth circuit has an "AND"—function for the outputs of the first and the second circuit, and a sixth circuit has an "EXCEL-OR"-function for the output signal of the speed converter and for the clocked output of the fifth logic circuit, and the clocked output of the sixth logic circuit is connected to the modem part for the lower bit rate.

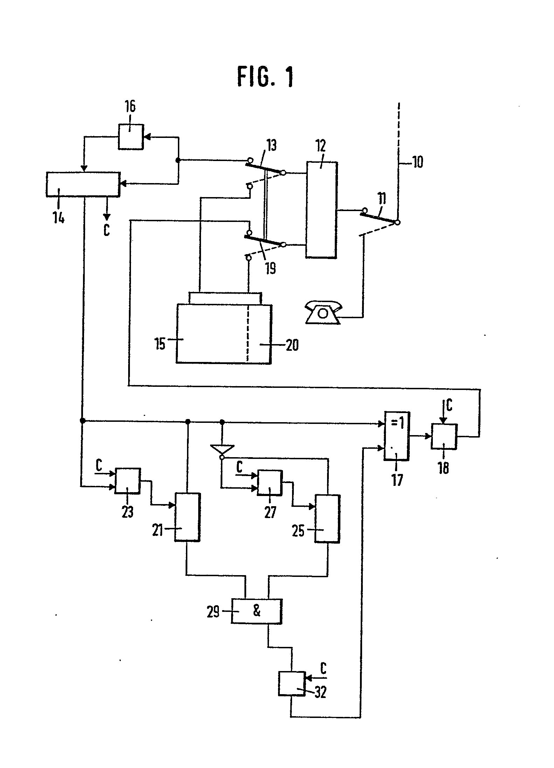

The invention will be elucidated with the help of the drawing in which
Fig. 1 represents a block diagram;
Figs. 2—6 represent pulse diagrams, in which according to

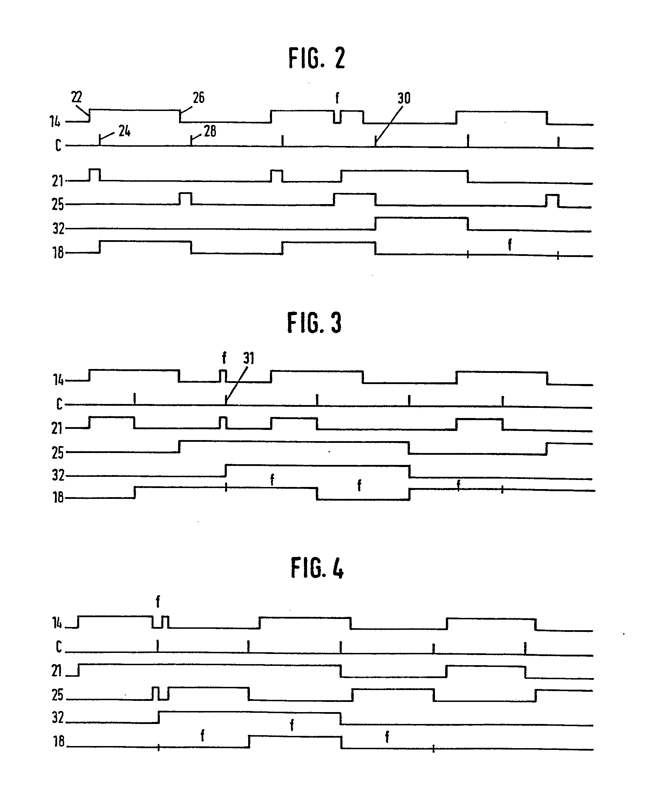

Fig. 2 an error occurs in the "1" state; according to
Fig. 3 an error in the "0" state, which coincides with a clock pulse; according to

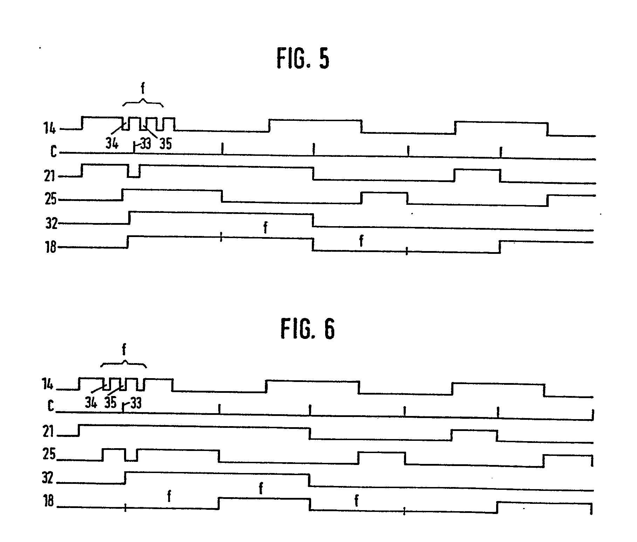

Fig. 4 an error in the "1" state, which coincides with a clock pulse, and in which according to
Figs. 5 and 6 trebled errors occur.

A central station, which is not shown in the figures, can be connected to subscriber stations by means of subscriber lines. Number 10 indicates such a subscriber line, to which, via a speech/data switch 11, of a subscriber station a modem 12 to be tested can be connected. The output of this modem for the higher bit speed, called 1200 baud in what follows, is connected via a view data terminal/test switch 13 either to the input of a speed converter 14 or to a view-data terminal 15.

The converter is controlled by a clock extraction circuit 16 with a clock signal of 1200 Hz. Via the logic circuits 17 and 18 and a transmission/test switch 19 the output of the converter 14 is connected to an input for the lower bit speed, called 75 baud in what follows, of the modem 12 to be tested. In the other position of the switch 19 the modem 12 is connected to a transmitting device 20, equipped with a keyboard. The other position of the switch 13 serves for passing on view data information to the terminal 15 via the line 10 and the modem 12. The other position of the switch 11 serves for normal telephone traffic.

In the Figs. 2—6 the output signal of the speed converter is indicated by 14, and a delayed clock signal, derived from the converter, is indicated by c.

A first logic circuit 21 (a so-called flip-flop circuit) becomes or remains conductive owing to a leading edge 22 (Fig. 2). Under the control of a pulse 24 of the clock signal c a third logic circuit 23 resets the first circuit 21. A second logic circuit 25 (also a flip-flop circuit) becomes or remains conductive owing to a trailing edge 26 (Fig. 2). Under the control of a pulse 28 of the clock signal c a fourth logic circuit 27 resets the second circuit 25. A fifth logic circuit 29 (an "AND"-gate) has an "AND"-function for the outputs of the first and the second circuit (21 and 25). In case they are both conductive, the clock signal c (e.g. pulse 30 Fig. 2, pulse 31 Fig. 3) applied to a logic circuit 32 will ensure that a signal is transmitted to the (sixth) logic circuit 17. The circuit 32 forms a store in which the information is kept till the next clock pulse. The sixth logic circuit 17 has an "EXCl-OR"-function. If no errors occur, the output of the circuit 32 will have the logic value "0". In fact the first logic circuit 21 in co-operation with the third logic circuit 23 translates each leading edge of the signal from the converter 14 to a pulse, the length of which is determined by the time between such leading edge and the first following pulse of the clock signal c. In a similar way the second logic circuit 25 in co-operation with the fourth logic circuit 27 translates each trailing edge of the signal from the converter 14. The outputs of the logic circuits 21 and 25 are combined by the AND-function of the fifth logic circuit 29 and then synchronised by the logic circuit 32. If no errors have occurred, the output of the circuit 32 will continuously have the logic value "0", because the pulses of the outputs of the circuits 21 and 25 do not have any overlap. If an error has occurred within the 1200-baud part of the modem 12, then at least one extra leading or trailing edge will be introduced within the signal from the converter 14. Such an extra edge causes lengthening of the pulses of the output from the logic circuits 21 and 25, in such a way that they will overlap with the effect that the output of circuit 32 will now show the logic value "1" for the duration of one or more clock periods. The output signal inverts the signal which comes from the speed converter 14 in the "EXCL-OR"-gate 17.

If only one of the signals from the converter 14 and the circuit 32 has the value "1", the clock signal c applied to the logic circuit 18 will ensure that a signal is transmitted at the right moment to the central station via the switch 19, the modem 12, the switch 11 and the line 10.

In the Figs. 2—6 the errors are indicated by f.

In the Figs. 2—4 only one of the three erroneous pulses in the signal 14 is shown. It is a known fact that with self-synchronizing scramblers, which are used at the central station, the number of transmission errors is trebled.

Fig. 2 shows a signal 14 with an error in the "1" state. The consequence is: one bit error in the signal 18.

Fig. 3 shows a signal 14 with an error in the "0" state, which coincides with a clock pulse c. The consequence is: three bit errors in the signal 18.

Fig. 4 shows a signal 14 with an error in the "1" state, which coincides with a clock pulse c. The consequence is: three bit errors in the signal 18.

Fig. 5 shows a signal 14 with a trebled error in the "1" state. The clock pulse 33 occurs between two errors 34 and 35. The consequence is: two bit errors in the signal 18.

Fig. 6 differs from Fig. 5 in that in the former the clock pulse coincides with one of the errors (35). The consequence is: three bit errors in the signal 18.

According to calculations the chance of a single bit error is 9/16 on an average, the chance of a doubled bit error is 4/16 on an average and the chance of a trebled bit error is 3/16 on an average. All the errors are observed and some of them are multiplied as will be clear from the above.

In the case of random errors the average multiplication factor will be

$$(9/16 \times 1) + (4/16 \times 2) + (3/16 \times 3) = \approx 1.6.$$

In practice the modem is found correct if within a certain observation period not more than a certain number of errors occurs. The requirement is for example at most 10 errors in an observation period of $10^4$ bits for the 75-baud part (corresponding with $1200 \times 10^4$: 75 for the 1200-baud part) or 133 s=2 m 13 s.

## Claim

System for the remote testing of a modem (12) of a subscriber's station for a speed of transmission which is different from the speed of reception, comprising a central station with a data tester, wherein a test signal is converted into a pseudo-random series signal, which is transmitted with a higher bit speed via a telephone line (10) to a higher-baud part of said modem (12) of the subscriber's station, from which modem (12) an output signal is converted by a converter (14) into a signal with a lower bit speed, which signal can be transmitted via a lower-baud part of the modem (12) to the central station, characterised in that the subscriber's station comprises an error detector between the speed converter (14) and the transmission channel of the modem (12) to be tested, which error detector comprises logic circuits, controlled by delayed clock pulses derived from a test signal, of which logic circuits a first circuit (21) is or remains conductive owing to a leading edge of the test signal, a second circuit (25) is or remains conductive owing to a trailing edge of the test signal, a third circuit (23) serves for resetting the first circuit and a fourth circuit (27) serves for resetting the second circuit, a fifth circuit (29) has an "AND"-function for the outputs of the first and the second circuit, and a sixth circuit (17) has an "EXCL-OR"-function for the output signal of the speed converter (14) and for the clocked output (32) of the fifth logic circuit (29), and the clocked output (18) of the sixth logic circuit (17) is connected to the modem part for the lower bit rate.

## Revendication

Système permettant le télécontrôle d'un modem (12) d'un poste d'abonné pour un débit de transmission qui est différent du débit de réception, comprenant un central doté d'un contrôleur de donnée, où un signal de contrôle est converti en un signal série pseudo-aléatoire qui est émis avec un débit binaire supérieur via une ligne téléphonique (10) à destination d'une partie à nombre de bauds supérieur dudit modem (12) du poste d'abonné, à partir duquel modem (12) un signal de sortie est converti par un convertisseur (14) en un signal ayant un débit binaire inférieur, lequel signal peut être émis via une partie à nombre de bauds inférieur du modem (12) à destination du central, caractérisé en ce que le poste d'abonné comprend un détecteur d'erreurs intercalé entre le convertisseur de débit (14) et le canal d'émission du modem (12) à contrôler, lequel détecteur d'erreurs comprend des unités logiques qui sont commandées par des impulsions d'horloge retardés obtenus à partir d'un signal de contrôle et dont une première unité (21) est ou reste conductrice sous l'effet d'un flanc antérieur du signal de contrôle, une deuxième unité (25) est ou reste conductrice sous l'effet d'un flanc postérieur du signal de contrôle, une troisième unité (23) sert à repositionner la première unité et une quatrième unité (27) sert à repositionner la deuxième unité, une cinquième unité (29) possède une fonction "ET" pour les sorties des première et deuxième unités, et une sixième unité (17) possède une fonction "OU exclusif" pour le signal de sortie du convertisseur de débit (14) et pour la sortie synchronisée (32) de la cinquième unité logique (29), la sortie synchronisée (18) de la sixième unité logique (17) étant connectée à la partie du modem qui est affectée au débit binaire inférieur.

## Patentanspruch

System zum Ferntesten eines Modems (12) einer Teilnehmerstation für eine Sendegeschwindigkeit, die von der Empfangsgeschwindigkeit verschieden ist, enthaltend eine Zentralstation mit einem Datentester, in welchem ein Testsignal in ein pseudozufälliges Reihensignal umgesetzt wird, welches über eine Telefonleitung (10) mit einer höheren Bitgeschwindigkeit zu einem für eine höhere Baud-Zahl bestimmten Teil des Modems (12) der Teilnehmerstation gesendet wird, wobei ein Ausgangssignal des Modems (12) durch einen Umsetzer (14) in ein Signal mit niedrigerer Bitgeschwindigkeit umgesetzt wird, welches Signal über einen für eine niedrigere Baud-Zahl bestimmten Teil des Modems (12) zur Zentralstation gesendet werden kann, dadurch gekennzeichnet, dass die Teilnehmerstation zwischen dem Geschwindigkeitsumsetzer (14) und dem Sendekanal des zu testenden Modems (12) einen Fehlerdetektor aufweist, der Logikschaltungen enthält, welche von verzögerten, aus einem Testsignal abgeleiteten Taktimpulsen gesteuert sind, und von welchen Logikschaltungen eine erste Schaltung (21) aufgrund einer Vorderflanke des Testsignals leitend ist oder bleibt, eine zweite Schaltung (25) aufgrund einer Rückflanke des Testsignals leitend ist oder bleibt, eine dritte Schaltung (23) zur Rückstellung der ersten Schaltung und eine vierte Schaltung (27) zur Rückstellung der zweiten Schaltung dienen, eine fünfte Schaltung (29) eine "UND"-Funktion für die Ausgangssignale der ersten und der zweiten Schaltung hat, und eine sechste Schaltung (17) eine "EXKLUSIV-ODER"-Funktion für das Ausgangssignal des Geschwindigkeitsumsetzers (14) und für das getaktete Ausgangssignal (32) der fünften Logikschaltung (29) hat, wobei das getaktete Ausgangssignal (18) der sechsten Logikschaltung (17) dem Modemteil für die niedrigere Bitgeschwindigkeit zugeführt ist.

# FIG. 1

# FIG. 2

# FIG. 3

# FIG. 4

# FIG. 5

# FIG. 6